(19)

Europäisches
Patentamt
European
Patent Office
Office européen
des brevets

(11) **EP 1 860 343 A2**

(12) **EUROPEAN PATENT APPLICATION**

(43) Date of publication:
**28.11.2007 Bulletin 2007/48**

(51) Int Cl.:
**F16G 13/04** $^{(2006.01)}$

(21) Application number: **07005577.7**

(22) Date of filing: **19.03.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **23.05.2006 JP 2006143168**

(71) Applicant: **Tsubakimoto Chain Co.
Kita-ku
Osaka 530-0005 (JP)**

(72) Inventors:
• **Morimoto, Takayuki
Osaka 530-0005 (JP)**
• **Ohara, Hitoshi
Osaka 530-0005 (JP)**
• **Komada, Minoru
Osaka 530-0005 (JP)**
• **Kotani, Kazufumi
Osaka 530-0005 (JP)**
• **Hamaguchi, Shuuji
Osaka 530-0005 (JP)**

(74) Representative: **Ullrich & Naumann
Patent-und Rechtsanwälte
Luisenstrasse 14
69115 Heidelberg (DE)**

(54) **Silent chain transmission device**

(57) A silent chain transmission utilizes two different kinds of link plates (110,120). In a first kind of link plate (110), the inner flank pitch line is farther than the outer flank pitch line from the chain pitch line. In a second kind of link plate (120) the inner flank pitch line is closer than the outer flank pitch line from the chain pitch line. Every four successive links includes at least one link composed of one type of link plate and at least one link composed of the other type of link plate.

Fig. 1

EP 1 860 343 A2

## Description

CROSS-REFERENCE TO RELATED APPLICATION

This application claims priority on the basis of Japanese patent application 2006-143168, filed May 23, 2006. The disclosure of Japanese application 2006-143168 is hereby incorporated by reference.

FIELD OF THE INVENTION

This invention relates to a silent chain transmission device, and more specifically, it relates to a silent chain transmission device of the kind used, for example, in the transfer mechanism of a four-wheel drive vehicle.

BACKGROUND OF THE INVENTION

Silent chains are commonly used for power transmission in motor vehicles, motorcycles, and the like. A silent chain has comprises a number of link plates, each having a pair of teeth and a pair of pin holes. The plates are stacked in rows that extend widthwise of the chain. The plates of adjacent rows are interleaved, and the interleaved rows of plates are connected to each other by connecting pins that extend through the pin holes.

Sounds, referred to as "pitch sounds" because they correspond to the chain pitch, are generated as the chain engages with a sprocket. These pitch sounds are typically reduced by incorporating link plates having slightly different rack pitches into the chain. The link plates are disposed in an irregular pattern along the longitudinal direction of the chain. A silent chain composed of link plates having different rack pitches is described in European Patent Specification EP 1 036 953, and the use of link plates having different rack pitches has resulted in significant improvements in chain performance insofar as reduction of vibration is concerned. However, when the silent chain is operated at high speed, vibration due to a polygonal movement of the chain is generated as the chain engages with a sprocket, and until now it has not been possible to achieve good suppression of vibration noise resulting from polygonal movement.

Another troublesome problem in the manufacture of a silent chain was that the chain is composed of two kinds of link plates, so that the link plates have two different rack pitches. The term "rack pitch" refers to the distance between the intersection of an imaginary line parallel to a line drawn through the centers of the pin holes of a link plate and the outer flanks of the link plate, the line being located so that the distance between the two intersections is 3/2 multiplied by the aperture pitch, i.e., 3/2 times the distance between the centers of the pin holes. The use of link plates having two different rack pitches results in only two engagement patterns. Consequently, cyclic engagement sounds could not be dispersed sufficiently to achieve a large reduction in engagement noise.

Thus, in order to disperse cyclic engagement sounds, a greater number of different kinds of link plates was needed, resulting in increased difficulties in manufacture of the link plates and in the assembly of the chain.

Accordingly, an object of this invention is to provide a silent chain transmission device which achieves various engagement patterns with only two kinds of link plates, so that cyclic engagement sounds can be better dispersed, and significant suppression of vibration noise can be achieved, without encountering the manufacturing and assembly problems that arise from the use of numerous different link plates.

SUMMARY OF THE INVENTION

The term "chain pitch" as used herein refers to the distance between the centers of the pin holes of a link plate.

The term "chain pitch line" refers to in a straight line extending through the centers of the pin holes of a link plate.

The term "inner flank pitch line" refers to a line, parallel to the chain pitch line, and intersecting the inner flanks of the link plate, the distance between the intersections being 1/2 of the chain pitch.

The term "outer flank pitch line" refers to a line, parallel to the chain pitch line, and intersecting the outer flanks of the link plate, the distance between the intersections being 3/2 of the chain pitch.

The term "vibration amplitude of a polygonal movement of the chain" refers to the magnitude of vibration, in the radial direction of a sprocket, when a silent chain, the teeth of which engage a sprocket by only their outer flanks, engages with a sprocket having involute teeth.

The term "free span" refers to a portion of a chain, which is in the process of engagement with a sprocket, but not seated thereon. Thus, the free span is a portion of the chain that is approaching a sprocket but is in a comparatively free state in that it is not fully restricted by engagement with the sprocket.

For convenience, a first group of link plates will be referred to as "A type link plates" or "first link plates," and a second group of link plates will be referred to as "B type link plates" or "second link plates." Preferably any selected four sequential links in the chain will always comprise both "A" type link plates and "B" type link plates. That is, at least one row of every four successive rows will consist of "A" type link plates, and at least one row of the same four successive rows will consist of of "B" type link plates. Thus, in the preferred chain, in no case will four sequential rows consist only of "A" type link plates or only of "B" type link plates.

The silent chain transmission device in accordance with the invention comprising a silent chain in engaged with a sprocket. The chain comprises interleaved widthwise rows of link plates, each link plate having a pair of teeth and a pair of pin holes, and connecting pins extending through the pin holes and connecting the interleaved rows of link plates. The link plates of the chain consist of first and second link plates (that is "A" type and "B" type link plates). All of the first link plates are identical, and all of the second link plates are identical but different from the first link plates, the first and second link plates are mixed in the longitudinal direction of the chain.

The sprocket has involute teeth with which the silent chain is engaged. The flank shape of the teeth of the first link plates satisfies the relationship Hia = Ho + Hs. Hia is the distance from a chain pitch line intersecting the centers of the pin holes of the first link plate to an inner flank pitch line, parallel to the chain pitch line, and intersecting the inner flanks of the link plate, the distance between the intersections being 1/2 of the chain pitch. Ho is the distance from the chain pitch line to an outer flank rackpitch line parallel to the chain pitch line and intersecting the outer flanks of the first link plate at points spaced by 3/2 the distance between the centers of the pin holes. Hs is the vibration amplitude of polygonal movement of the chain. The flanks of the teeth of the first link plates are shaped so that the distance from a free span of the chain approaching the sprocket to a line parallel to the free span and intersecting the center of the sprocket is constant from the start of engagement with a sprocket tooth to the seating on the sprocket tooth. The teeth of the second link plates are shaped so that only their outer flanks engage with, and seat on, the involute teeth of the sprocket.

Since the height of the free span is constant in the engagement process from the start of engagement with a sprocket tooth to seating on the sprocket tooth, the link plates remove the vertical movement due to polygonal movement of the chain so that the vibration noise of the chain is significantly suppressed.

Since the flank shape of the teeth of the second ("B" type) link plates is such that the link teeth engage with the involute teeth of the sprocket with only the outer flanks seated of the link tooth, continual starting engagement of inner flanks of the first ("A" type) link plates with the sprocket teeth is avoided, and instead various starting patterns are established, depending on the arrangement of the first and second link plates.

Furthermore, since the inner flanks of the first ("A" type) link plates begin to engage an involute sprocket tooth earlier than an outer flanks of the preceding link plates, the arrangement of the first ("A" type) and second ("B" type) link plates influences the engagement of inner and outer flanks of the first link plates and the outer flanks of the second link plates. As a result, various engagement patterns can be established with only two kinds of link plates, and the link plates can be easily manufactured and assembled into a chain capable of achieving a significant reduction in cyclic engagement sounds.

Preferably, every four rows of sequentially joined rows of link plates in the chain comprises at least one row composed of first link plates and at least one row composed of second link plates. There are eight possible arrangements of four sequentially joined rows of four link plates where at least one row is composed of first link plates and at least one row is composed of second link plates.

BRIEF DESCRIPTION OF THE DRAWINGS

FIG. 1 is a side elevational view showing the outline of a portion of a silent chain according to the invention;

FIG. 2 is longitudinal horizontal section of the chain of FIG. 1;

FIG. 3 is a schematic elevational view showing the relationship between link plates of the chain;

FIG. 4 is a schematic elevational view showing the shape of a first link plate;

FIG. 5 is a schematic elevational view showing the shape of a second link plate;

FIG. 6 is a schematic elevational view showing the engagement of the chain with a sprocket; and

FIG. 7 is a schematic elevational view showing the engagement of the chain with the sprocket of FIG. 6, when the sprocket is rotated by one half the pitch angle (θ/2) from the position illustrated in FIG. 6.

DETAILED DESCRIPTION OF THE PREFERRED EMBODIMENTS

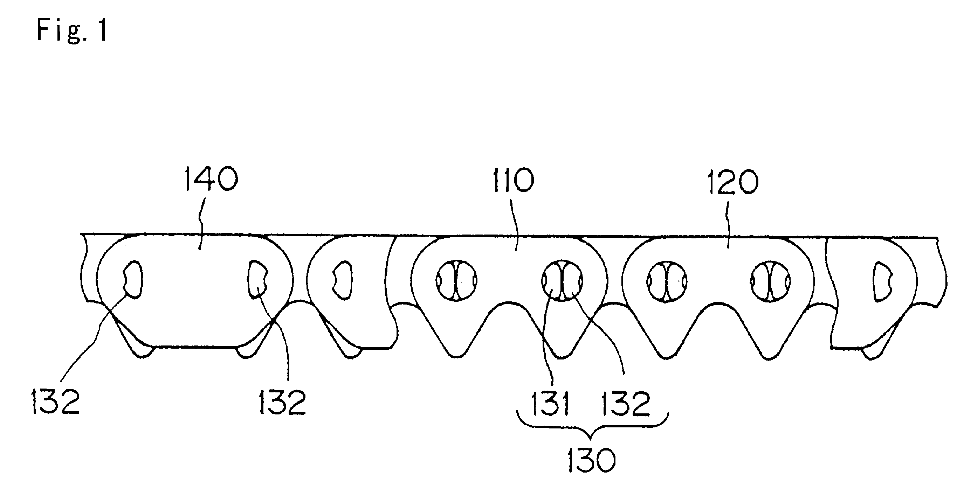

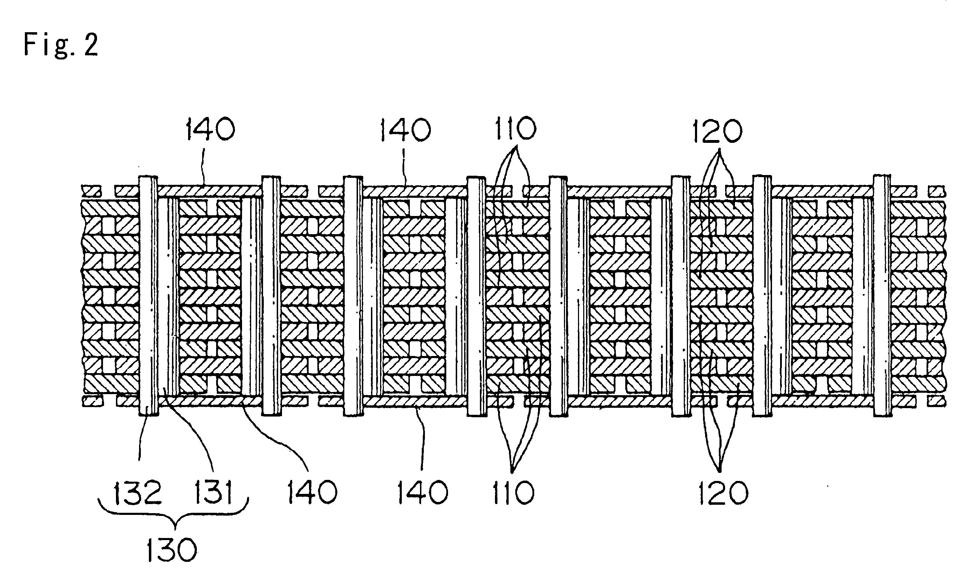

As shown in FIGs. 1 and 2, the silent chain transmission device comprises a silent chain in which first, or "A" type, link plates 110 and second, or "B" type, link plates 120 are mixed along the longitudinal direction of the chain. Interleaved rows, each preferably consisting of either "A" type or "B" type link plates, are connected to one another by connecting pins 130, each preferably composed of a rocker pin 132 and a joint pin 131. The chain is wound on a sprocket (not shown in FIGs. 1 and 2) for the transmission of power in a mechanism such as the transfer mechanism in a four wheel drive vehicle.

In addition to the "A" and "B" type link plates, which have teeth, the chain may also include toothless guide plates 140 for keeping the chain aligned with the sprockets by engagement with the sides of the sprocket teeth. Pins 132, which are the longer of the pins of which the connecting pins 130 are composed, are fixed to the guide plates 140 by caulking or other suitable means.

In a typical chain according to the invention, the "A" type link plates 110 and "B" type link plates 120 are arranged present in a ratio of about 2 to 1. However, other ratios may be used.

All the link plates 110 and 120 have the same chain pitch P. The rack pitch of both the "A" type link plates 110 and the "B" type link plates 120 is equal to 3/2 times the chain pitch P.

The flank shape of the link teeth of the "A" type link plates, which typically constitute the majority of the linkplates in the chain, satisfies the following relationship:

$$Hia = Ho + Hs$$

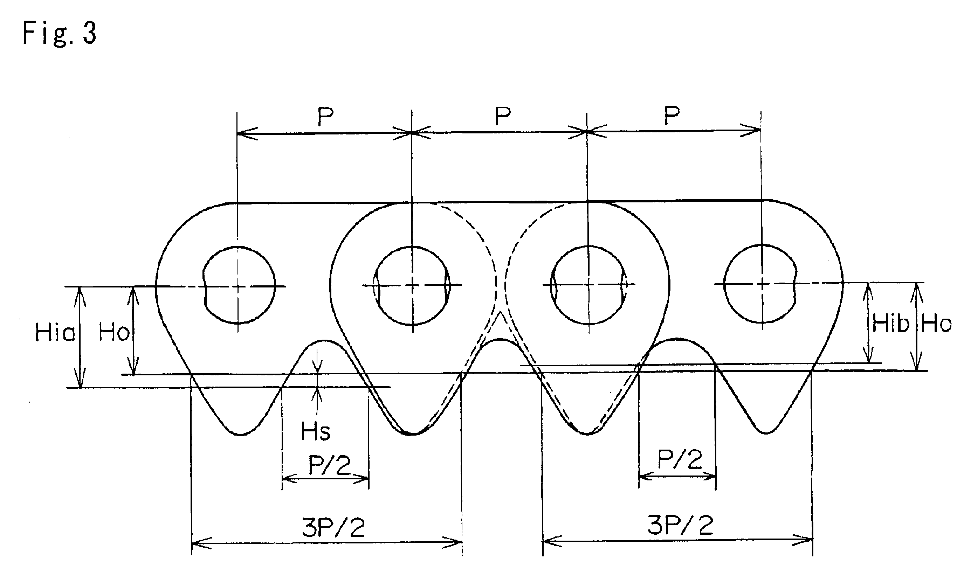

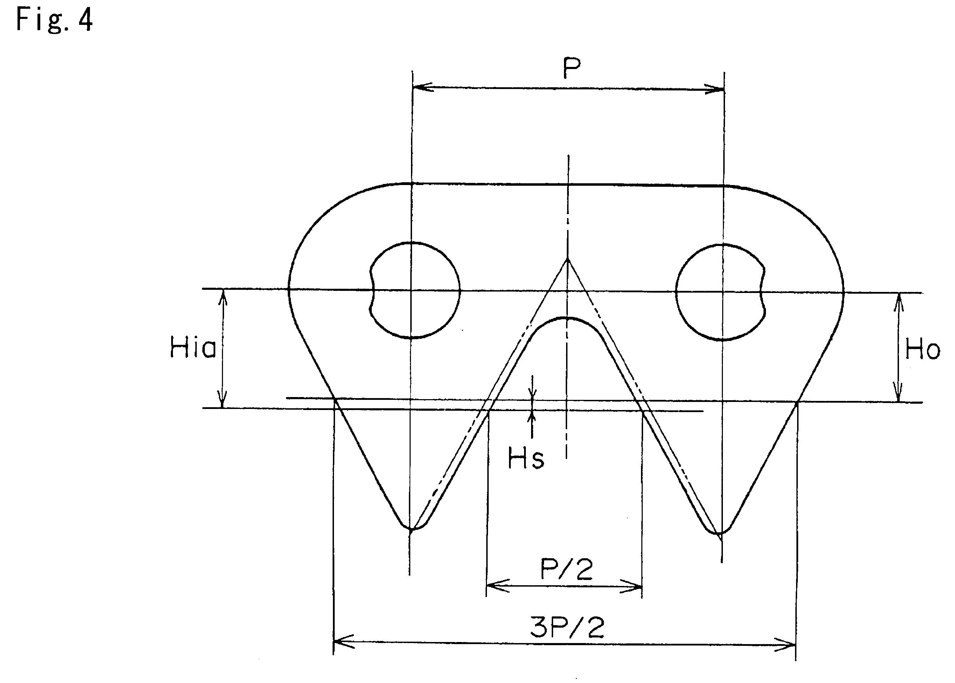

where, as shown in FIGs. 3 and 4, Hia is the distance from the chain pitch line intersecting the centers of the pin holes of the first link plate to an inner flank pitch line, parallel to the chain pitch line, and intersecting the inner flanks of the link plate, the distance between the intersections being 1/2 of the chain pitch, Ho is the distance from the chain pitch line to an outer flank rack pitch line parallel to the chain pitch line and intersecting the outer flanks of the first link plate at points spaced by 3/2 the distance between the centers of the pin holes, and Hs is the vibration amplitude of polygonal movement of the chain.

The flank shape of the teeth of the first link plates 110 (the "A" type link plates) is such that the height of the free span of the chain approaching the sprocket is constant from the start of engagement with a sprocket tooth to seating on the sprocket tooth.

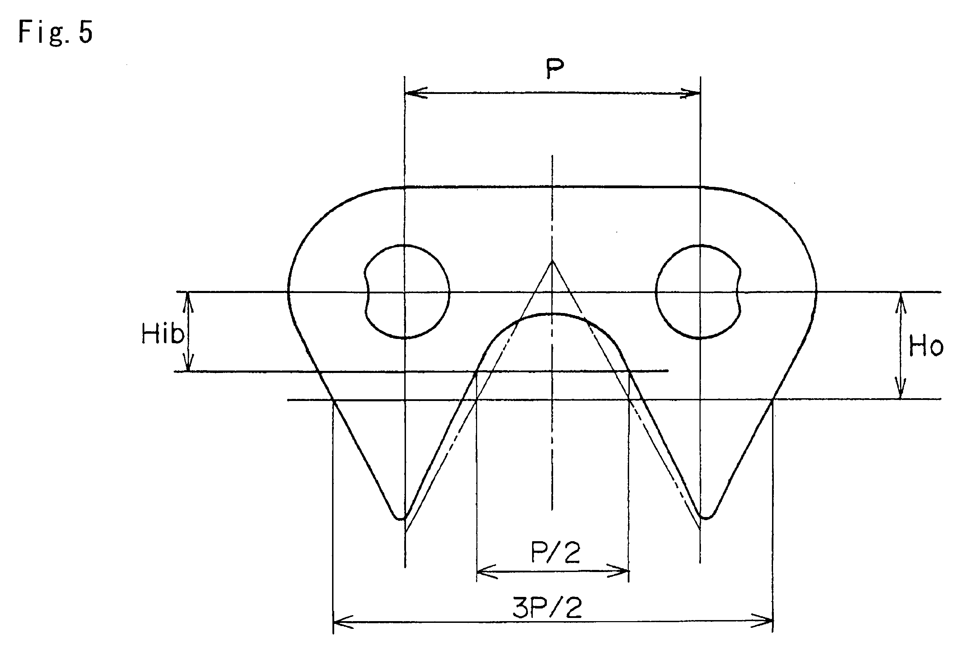

On the other hand, a flank shape forming a link tooth in the second link plates 120 (the "B" type link plates) is such so that the link teeth engage with the involute teeth of the sprocket so that they are seated only the outer flanks of the "B" type link teeth in engagement with the sprocket teeth. As shown in FIG. 5, the distance from the chain pitch line to the outer flank rack pitch line for the "B" type link plate is Ho, the same distance as in the case of the "A" type link plates. The distance Hib from the chain pitch line to the inner flank pitch line of the "B" type link plates is smaller than the corresponding distance Hia for the "A" type link plates. Hib is also smaller than Ho, whereas Hia is larger than Ho. Accordingly when the "B" type link plates are seated on the sprocket teeth the inner flanks do not engage the sprocket teeth.

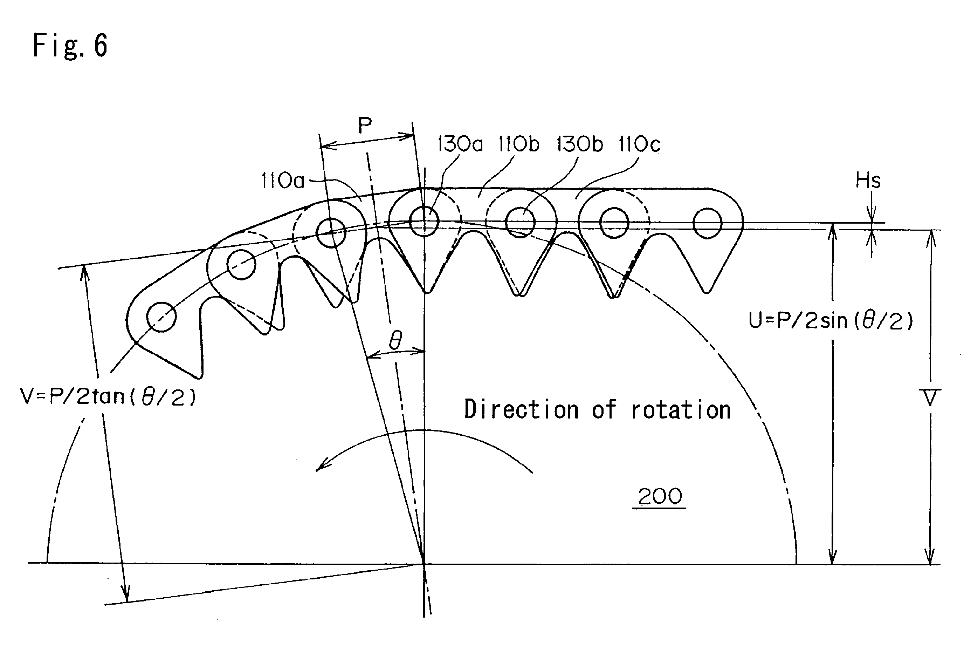

FIG. 6, shows a condition in which a straight line passing through the center of the sprocket 200 and the center of a connecting pin 130a forms a right angle with the pitch line of the free span of the chain. An "A" type link plate 110a is shown engaged with involute teeth of sprocket 200 with its outer flanks seated thereon. The distance U, from the center of the sprocket to the connecting pin 130a of the chain, is expressed by:

$$U = P/(2 \sin(\theta/2))$$

However, the distance from the center of the sprocket 200 to the chain pitch line of the "A" type link plate 110b in the free span of the chain depends on the engagement of an inner flank of its leading tooth with a sprocket tooth. In the free span of the chain, which is stretched in a straight line and includes link plate 110b and links that follow it, the inner flanks of the link teeth of the "A" type link plates bulge past the adjacent outer flanks of the teeth of a next row of link plates. Thus, the sprocket 200 can be regarded as a pinion, and the free span can be regarded as a tooth rack having trapezoidal tooth forms with inner flanks. That is, the free span and the sprocket exhibits an engagement relationship similar to that of a conventional rack and pinion.

Therefore, when the "A" type link plate 110b engages with the sprocket 200, the inner flank pitch line is farther than the outer flank pitch line from the chain pitch line by and amount Hs. The perpendicular distance from the center of the sprocket 200 to the chain pitch line of the "A" type link plate 110b of the free span remains at a height U.

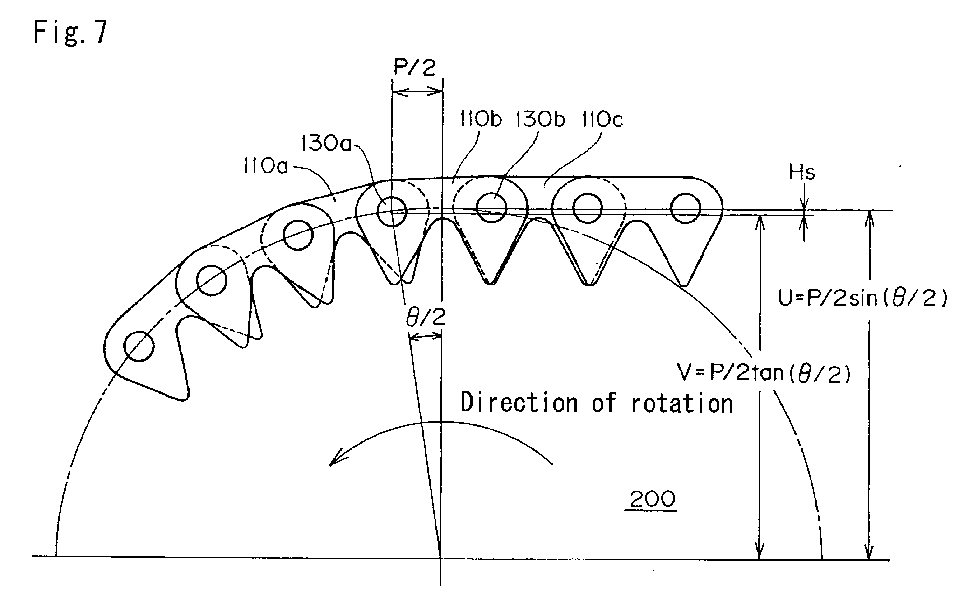

FIG. 7 shows a condition in which where the sprocket 200 is rotated by a half pitch angle, that is, by θ/2, from the position illustrated in FIG. 6. The "A" type link plate is shown moved forward by a half pitch. The "A" type link plate 110a is seated with both its outer flanks in engagement with sprocket teeth, and the distance V, from the center of the sprocket 200 to the center of pin 130a is expressed by

$$V = P/(2 \tan(\theta/2))$$

However, when an inner flank of the "A" type link plate 110c engages with the sprocket, the pitch line of the inner flank satisfies the expression Hia = Ho + Hs, and the engagement height V is increased by Hs. The height U of the center of connecting pin 130b is expressed by

$$U = P/(2 \sin(\theta/2))$$

and

$$U = V + Hs$$

Thus, the height of the "A" type link plate 110c in FIG. 6 is always kept at U, from the start of engagement of the inner flank of the "A" type link plate 110c with the sprocket 200 to the point at which the connecting pin 130b has advanced to the position previously occupied by connecting pin 130a.

During this step, the inner flank of the "A" type link plate 110b separates from the sprocket tooth by flexional movement about the connecting pin 130a, and the "A" type link plate 110b starts engaging with the sprocket smoothly while being supported by the connecting pins 130a and 130b. On the other hand, since an outer flank of the "A" type link plate 110b has the relationship Hia = Ho + Hs, it has not yet come into contact with the sprocket teeth.

In summary, at all stages of the engagement of the silent chain with the sprocket, the free span is maintained at a height U, and does not exhibit vertical movements due to polygonal movement of the chain as it wraps around the sprocket.

Since, the distance from the pitch line of the chain to the pitch line of the inner flanks is greater, by the vibration amplitude Hs due to polygonal movement, than the distance from the pitch line of the chain to the pitch line of the outer flanks, and engages with involute teeth of the sprocket, from the start of the engagement to the point at which the link plate is seated, the height of the free span of the chain is kept to a fixed value U, and the vertical vibration due topolygonalmovement is removed. As a result, vibration noise and impact noise occurring at engagement can be reduced.

Furthermore, since an inner flank of the "A" type link plate begins to engage an involute tooth of the sprocket earlier than an outer flank of the link plate preceding that "A" type link plate, the arrangement of the "A" type link plates 110 and the "B" type link plates 120 influences the engagement pattern, and various engagement patterns can be achieved, with the result that cyclic engagement sounds can be reduced.

In the chain according to the invention, "A" type link plates 110 and the "B" type link plates 120 are always present in every continuously connected four links. That is, no continuously connected four links consist solely of one type of link plate. The links can be connected in any one of the following eight arrangements:

(1) A link-A link-A link
(2) A link-A link-B link
(3) A link-B link-A link
(4) A link-B link-B link
(5) B link-A link-A link
(6) B link-A link-B link
(7) B link-B link-A link
(8) B link-B link-B link

Thus, eight engagement patterns can be produced by use of two kinds of link plates 120. Manufacture of the link plates and assembly of the chain is simplified since only two kinds of link plates are utilized. Moreover, cyclic engagement sounds are significantly reduced and vibration noises are suppressed.

Furthermore, in both the "A" type and "B" type link plates each engagement surface can be subjected to shaving or fine blanking, so that the sheared surface is about 70% or more of the plate thickness of each of the plates. Shaving reduces abrasion of the a sprocket tooth surfaces, improves durability of the chain, and also prevents flexional failure. Furthermore shaving helps reduce vibration noise, and impact noise on engagement of the chain with the sprocket.

Various modifications can be made to the chain. For example, the connecting pins, which connect the link plates to one another, may be simple round pins instead of rocker pins. However, especially when the silent chain transmission device of the invention is used in a transfer mechanism the rocker pins are preferred.

## Claims

1. A silent chain transmission device comprising a silent chain in engaged with a sprocket (200), in which:

   the chain comprises interleaved widthwise rows of link plates (110, 120), each link plate (110,120) having a pair of teeth and a pair of pin holes, and connecting pins (130) extending through the pin holes and connecting the interleaved rows of link plates (110, 120);
   the link plates (110,120) of the chain consist of first and second link plates (110, 120), all of the first link plates (110) being identical and all of the second link plates (120) being identical, but different from the first link plates (110);
   the first and second link plates (110, 120) are mixed in the longitudinal direction of the chain;
   the sprocket (200) has involute teeth with which the silent chain is engaged;
   the flank shape of the teeth of the first link plates satisfies the relationship Hia = Ho + Hs, where Hia is the distance from a chain pitch line intersecting the centers of the pin holes of the first link plate (110) to an inner flank pitch line, parallel to the chain pitch line, and intersecting the inner flanks of the link plate (110), the distance between the intersections being 1/2 of the chain pitch (P), Ho is the distance from the chain pitch line to an outer flank rack pitch line parallel to the chain pitch line and intersecting the outer flanks of the first link plate (110) at points spaced by 3/2 the distance between the centers of the pin holes, and Hs is the vibration amplitude of polygonal movement of the chain, and the flanks of the teeth of the first link plates (110) are shaped so that the distance from a free span of the chain approaching the sprocket to a line parallel to the free span and intersecting the center of the sprocket (200) is constant from the start of engagement with a sprocket tooth to the seating on the sprocket tooth; and
   the teeth of the second link plates (120) are shaped so that only their outer flanks engage with, and seat on, the involute teeth of the sprocket (200).

2. A silent chain transmission device according to claim 1, in which every four rows of sequentially joined rows of link plates (110, 120) in the chain comprises at least one row composed of said first link plates (110) and at least one row composed of said second link plates (120).

Fig. 1

140    110    120

132    132    131  132

130

EP 1 860 343 A2

## Fig. 2

Fig. 3

Fig. 4

EP 1 860 343 A2

Fig. 5

Fig. 6

## Fig. 7

P/2

110b 130b 110c

130a

110a

Hs

$\theta/2$

$U = P/2\sin(\theta/2)$

$V = P/2\tan(\theta/2)$

Direction of rotation

200

EP 1 860 343 A2

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006143168 A
- EP 1036953 A